# EUROPEAN PATENT APPLICATION

(11) **EP 2 166 378 A2**
(43) Date of publication of application: **24.03.2010**
(21) Application number: 09170443.7
(22) Date of filing: 16.09.2009
(51) Int. Cl.: G01V 1/28

(54) **Interferometric Directional Balancing**

(30) Priority: 17.09.2008 US 97800 P; 05.08.2009 US 536232
(71) Applicant: Geco Technology B.V., 2586 BJ S'Gravenhage (NL)
(72) Inventor: Curtis, Andrew, Edinburgh, EH16 4AW (GB)
(74) Representative: Suckling, Andrew Michael

(57) **Abstract**

A method for estimating seismic data from sources of noise in the earth. The method includes calculating a first set of Green's functions between a first seismic receiver and each seismic receiver of an array of seismic receivers using interferometry. The array of seismic receivers is disposed around the first seismic receiver, and the first seismic receiver is part of the array of seismic receivers. The method also includes calculating one or more correction factors to correct the first set of Green's functions and calculating a second set of Green's functions between each seismic receiver of the array and a second seismic receiver using interferometry. Here, the first seismic receiver is disposed at a predetermined distance away from the second seismic receiver. Also, the first set and the second set of Green's functions are biased due to non-identical strengths of the sources of noise. The method then applies the correction factors to the second set of Green's functions to create a set of unbiased Green's functions between each seismic receiver of the array and the second seismic receiver.

## Description

### BACKGROUND

### Related Applications

This application claims priority to US provisional patent application serial number 61/097,800, filed September 17, 2008, titled INTERFEROMETRIC DIRECTIONAL BALANCING, which is incorporated herein by reference.

### Field of the Invention

Implementations of various technologies described herein generally relate to seismic data processing, and more particularly, the seismic data as indicated in Green's functions for waves traveling between a pair of locations.

### Description of the Related Art

The following descriptions and examples are not admitted to be prior art by virtue of their inclusion within this section.

Seismic exploration is widely used to locate and/or survey subterranean geological formations for hydrocarbon deposits. Since many commercially valuable hydrocarbon deposits are located beneath areas of land and bodies of water, various types of land and marine seismic surveys have been developed.

In a typical land seismic survey, seismic sensors are installed in specific locations around the land in which hydrocarbon deposits may exist. Seismic sources, such as vibrators, may move across the land and produce acoustic signals, commonly referred to as "shots," directed down into strata beneath the Earth's surface, where they are reflected from the various subterranean geological formations. Reflected signals are received by the sensors, digitized, and then transmitted to the survey database. The digitized signals are referred to as seismograms and are recorded on the survey database.

In a typical marine seismic survey, seismic streamers are towed behind a survey vessel. The seismic streamers may be several thousand meters long and contain a large number of sensors, such as hydrophones, geophones, and associated electronic equipment, which are distributed along the length of the seismic streamer cable. The survey vessel may also include one or more seismic sources, such as air guns and the like. The seismic streamers may be in an over/under configuration, i.e., one set of streamers being suspended above another set of streamers. Two streamers in an over/under configuration, referred to as twin streamers, may be towed much deeper than streamers in a conventional single configuration.

As the seismic streamers are towed behind the survey vessel, acoustic signals, commonly referred to as "shots," produced by the one or more seismic sources are directed down through the water into strata beneath the water bottom, where they are reflected from the various subterranean geological formations. Reflected signals are received by the sensors, digitized, and then transmitted to the survey vessel. The digitized signals are referred to as seismograms and are recorded and at least partially processed by a signal processing unit deployed on the survey vessel.

The ultimate aim of these processes is to build a representation of the subterranean geological formations beneath the land or beneath the streamers. Analysis of the representation may indicate probable locations of hydrocarbon deposits in the subterranean geological formations.

### SUMMARY

Described herein are implementations of various technologies for estimating unbiased Green's functions between a pair of locations with energy from surrounding sources.

In one implementation, a method for estimating unbiased Green's functions between a pair of locations with energy from surrounding sources may include calculating a first set of Green's functions between a first seismic receiver and each seismic receiver of an array of seismic receivers using interferometry. The array of seismic receivers is disposed around the first seismic receiver, and the first seismic receiver is part of the array of seismic receivers. The method also includes calculating one or more correction factors to correct the first set of Green's functions and calculating a second set of Green's functions between each seismic receiver of the array and a second seismic receiver using interferometry. Here, the first seismic receiver is disposed at a predetermined distance away from the second seismic receiver. Also, the first set and the second set of Green's functions are biased due to non-identical strengths of the sources of noise. The method then applies the correction factors to the second set of Green's functions to create a set of unbiased Green's functions between each seismic receiver of the array and the second seismic receiver.

In another implementation, a method for estimating unbiased Green's functions between a pair of locations with energy from surrounding sources may include calculating a first set of Green's functions between a first seismic receiver and each seismic receiver of an array of seismic receivers using interferometry. The array of seismic receivers is disposed around the first seismic receiver. The method also includes calculating one or more correction factors to correct the first set of Green's functions and calculating a second set of Green's functions between each seismic receiver of the array and a second seismic receiver using interferometry. Here, the first seismic receiver is disposed at a predetermined distance away from the second seismic receiver and the first set and the second set of Green's functions are biased due to non-identical strengths of the sources of noise. The method then includes applying the correction factors to the second set of Green's functions to create a set of unbiased Green's functions between each seismic receiver of the array and the second seismic receiver and interpolating the unbiased set of Green's functions to determine a Green's function between the first seismic receiver and the second seismic receiver.

In yet another implementation, a method for estimating unbiased Green's functions between a pair of locations with energy from surrounding sources may include calculating a first set of Green's functions between a first seismic receiver and each seismic receiver of an array of seismic receivers using interferometry. The array of seismic receivers is disposed around the first seismic receiver such that the seismic receivers in the array are assumed to be located in a seismic survey area having a homogenous, isotropic subterranean medium. The method also includes calculating one or more correction factors to correct the first set of Green's functions. Here, the correction factors are calculated based on a similarity of one or more radiation properties that exist between the first seismic receiver and each seismic receiver in the array located at a same radius from the first seismic receiver. The method then includes calculating a second set of Green's functions between each seismic receiver of the array and a second seismic receiver using interferometry. The first seismic receiver is disposed at a predetermined distance away from the second seismic receiver and the first set and the second set of Green's functions are biased due to non-identical strengths of the sources of noise. The method then includes applying the correction factors to the second set of Green's functions to create a set of unbiased Green's functions between each seismic receiver of the array and the second seismic receiver and interpolating the unbiased set of Green's functions to determine a Green's function between the first seismic receiver and the second seismic receiver.

The claimed subject matter is not limited to implementations that solve any or all of the noted disadvantages. Further, the summary section is provided to introduce a selection of concepts in a simplified form that are further described below in the detailed description section. The summary section is not intended to identify key features or essential features of the claimed subject matter, nor is it intended to be used to limit the scope of the claimed subject matter.

### BRIEF DESCRIPTION OF THE DRAWINGS

Implementations of various technologies will hereafter be described with reference to the accompanying drawings. It should be understood, however, that the accompanying drawings illustrate only the various implementations described herein and are not meant to limit the scope of various technologies described herein.

Figure 1A illustrates a schematic diagram of one or more sources and receivers used to estimate unbiased Green's functions in accordance with implementations of various techniques described herein.

Figure 1B illustrates a schematic diagram of a dense array of receivers used to estimate unbiased Green's functions in accordance with implementations of various techniques described herein.

Figure 2 illustrates a flow diagram of a method for estimating unbiased Green's functions between a pair of locations with energy from surrounding sources in accordance with one or more implementations of various techniques described herein.

Figure 3 illustrates radiation patterns across a dense array of receivers in accordance with one or more implementations of various techniques described herein.

Figure 4 illustrates a set of Green's function estimates between a virtual source and one or more receivers in accordance with one or more implementations of various techniques described herein.

Figure 5 illustrates a schematic diagram of one or more sources and receivers arranged in a scattering model in accordance with implementations of various techniques described herein.

Figure 6 illustrates a set of Green's function estimates between a virtual source and a one or more receivers as determined in a scattering model in accordance with one or more implementations of various techniques described herein.

Figure 7 illustrates a schematic diagram of one or more sources and receivers arranged in a reflector model in accordance with implementations of various techniques described herein.

Figure 8 illustrates a set of Green's function estimates between a virtual source and one or more receivers as determined in a reflector model in accordance with one or more implementations of various techniques described herein.

Figure 9 illustrates a computer network into which implementations of various technologies described herein may be implemented.

### DETAILED DESCRIPTION

The discussion below is directed to certain specific implementations. It is to be understood that the discussion below is only for the purpose of enabling a person with ordinary skill in the art to make and use any subject matter defined now or later by the patent "claims" found in any issued patent herein.

A homogeneous Green's function (the Green's function plus its time-reverse) between two points has been proven to be constructed from records of the Green's functions between each of those points and a surrounding boundary of energy sources without the need of "shots" at those two points. Here, both monopolar and dipolar boundary sources may be useful in determining the homogenous Green's function. However, only monopolar sources may be necessary in determining the homogenous Green's function if the boundary is sufficiently far away from the two points such that energy paths to each point leave the boundary noise sources approximately perpendicularly to the boundary. If the boundary sources are fired individually and sequentially, recordings made at the two locations may be cross-correlated (or convolved, or deconvolved, depending on the particular source and receiver geometry) and summed over boundary sources to obtain the inter-receiver homogeneous Green's function, and hence the inter-receiver Green's function. This operation is what is referred to as "interferometry".

Similar homogeneous Green's functions may be obtained for diffusive (e.g., highly scattered) wavefields. Under a unified formulation of the theory it has been shown that other types of Green's functions, such as electrokinetic Green's functions in poroelastic or piezoelectric media, can be retrieved. Similar results may also hold for dissipative media and for monopolar random noise sources provided either that the boundary connecting the noise sources is sufficiently irregular (i.e., the noise source locations are sufficiently random), or is sufficiently far away from the receivers as described above. If neither of these conditions is present, then dipolar noise sources may need to be obtained to determine the homogeneous Green's function.

Impulsive or noise source versions of the above theory created a new schema with which synthetic wavefields between receivers could be modeled flexibly. In an exploration setting, the case of borehole receivers and surface sources seismic interferometry may be used to re-datum both sources and receivers into the borehole, removing many undesirable near-surface related effects from the data. Major body wave components of Green's functions could be estimated using background (passive) noise records in a particularly quiet area.

In order to build the representation of the subterranean geological formations, seismic data may be processed. It is desirable to be able to develop a method to process the data more efficiently and to have a method and an apparatus to make this possible.

The following paragraphs provide a brief description of one or more implementations of various technologies and techniques directed at estimating unbiased Green's functions. Two locations for two seismic receivers in a survey area may be defined by a user in order to estimate a Green's function between those two receivers. Unfortunately, the Green's function between these two receivers may be biased due to the existence of unequal seismic sources located around the two seismic receivers. In order to estimate the effects of the unequal seismic sources on the estimated Green's function between the two receivers, an array of receivers may be placed around the first defined seismic receiver location.

In one implementation, a Green's function may then be estimated between the first defined seismic receiver and each receiver in the array of receivers around the first defined seismic receiver. As mentioned above, the Green's function between the first defined seismic receiver and any receiver in the array of receivers may be biased due to the unequal seismic sources located around all of the receivers. However, since a Green's function is calculated for each receiver in the array of receivers, the effects of the unequal seismic sources may be determined by analyzing the differences between each Green's function that was obtained between the first defined seismic receiver and each receiver in the array.

As a result, one or more correction factors may be calculated for each obtained Green's function in order to account for the unequal seismic sources located around the two defined seismic receivers. Upon determining the correction factors for each Green's function between the first defined seismic receiver and each seismic receiver in the array of receivers, a Green's function between each receiver in the array of receivers and the second defined seismic receiver may then be estimated. The correction factors that were determined for the Green's functions between the first defined seismic receiver and each receiver in the array of receivers may then be applied to the Green's functions between each receiver in the array of receivers and the second defined seismic receiver.

After applying the correction factors to the Green's functions between each receiver in the array of receivers and the second defined seismic receiver, the corrected Green's functions may be interpolated to determine the unbiased Green's function between the first defined seismic receiver and the second defined seismic receiver.

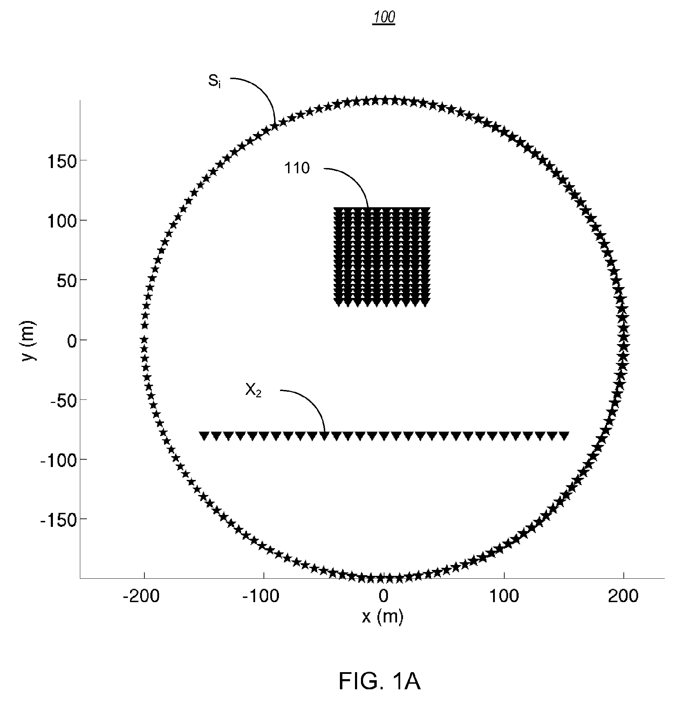

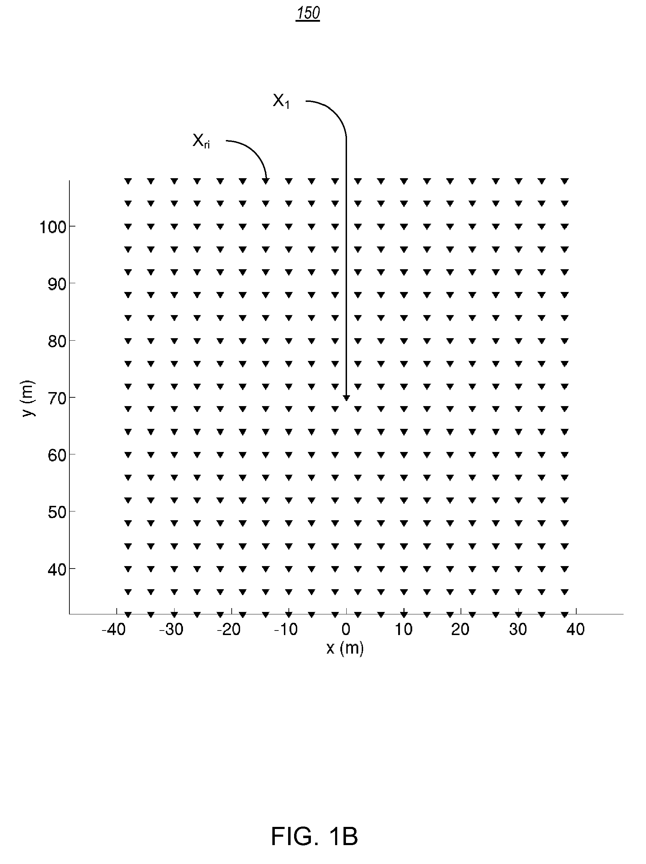

One or more implementations of various techniques for estimating unbiased Green's functions will now be described in more detail with reference to Figures 1-8 in the following paragraphs.

Figure 1A illustrates a schematic diagram of one or more sources and receivers used to estimate unbiased Green's functions in accordance with implementations of various techniques described herein. In one implementation, a dense array of receivers 110 may be placed on a land terrain, on a sea surface, or on a body of water. Although, in this implementation, the dense array of receivers 110 may be shaped like a square, it should be noted that in other implementations the dense array of receivers 110 may form a different shape, or it may not make up a shape at all.

The line of receivers X₂ may include one or more seismic sensors capable of measuring and recording seismic waves. Although, in this implementation, the line of receivers X₂ may be organized in a line, it should be noted that in other implementations the line of receivers X₂ may not be organized in a line. The source signals Sᵢ may indicate a distribution of noise around the dense array of receivers 110 and the line of receivers X₂. The distribution of noise may include seismic noise sources that naturally exist in the earth such as, but not limited to, the Earth's microseism, noise due to oceanic waves, earthquakes or rock fracturing, anthropogenic noise, and the like. The distribution of noise may also include a noise field created by active seismic sources such as vibrators, air guns, and the like. In Figure 1A, the strength of the source signals Sᵢ may be indicated by the size of the star on the figure. As such, the strength of the source signals Sᵢ may be strongest at [200, 0] of the X-Y axis, and the strength of the source signals Sᵢ may be weakest at [-200,0].

Figure 1B illustrates a schematic diagram of a dense array of receivers 150 in accordance with implementations of various techniques described herein. The dense array of receivers 150 may include one or more receivers Xᵣᵢ. In one implementation, each receiver Xᵣᵢ may be seismic sensors like those of the line of receivers X₂. In this implementation, each receiver Xᵣᵢ may be equally spaced between each other, but in other implementations each receiver Xᵣᵢ may be spaced apart at different distances, or at random. Receiver X₁ may be located within the dense array of receivers 110 in order to estimate unbiased Green's function between the receiver X₁ and the line of receivers X₂. In one implementation, the receiver X₁ may correspond to one receiver Xᵣᵢ in the dense array of receivers 110, but it should be noted that in other implementations the receiver X₁ may be an additional receiver in addition to the receivers in the dense array of receivers 150.

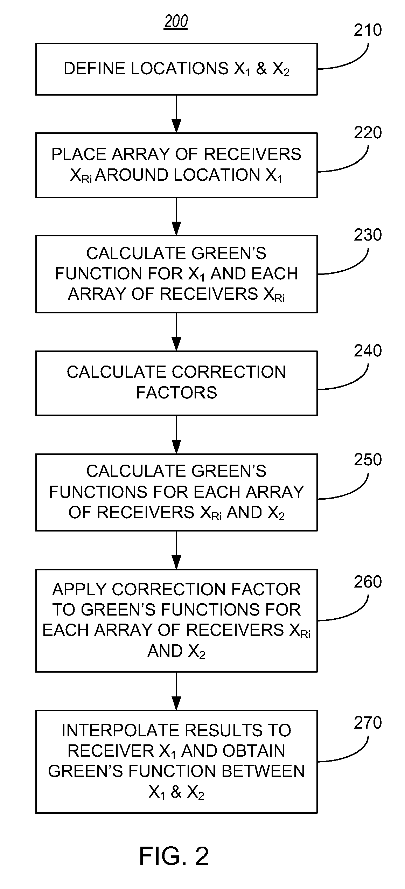

Figure 2 illustrates a flow diagram of a method 200 for estimating unbiased Green's functions between a pair of locations with energy from surrounding sources in accordance with one or more implementations of various techniques described herein. The following description of method 200 is made with reference to the sources and receivers of Figure 1A and the dense array of receivers 150 of Figure 1B. Additionally, it should be understood that while the operational flow diagram indicates a particular order of execution of the operations, in some implementations, certain portions of the operations might be executed in a different order.

At step 210, seismic receivers may be defined at two or more locations such that a Green's function may be estimated between the receivers. In one implementation, a first seismic receiver X₁ may be placed in a specified location to denote the location of a virtual source in estimating a Green's function. A second seismic receiver X₂ may be placed at a predetermined distance away from the first seismic receiver X₁. In one implementation, the second seismic receiver X₂ may consist of one or more seismic receivers arranged in a line such as the line of receivers 120 as described in Figure 1A.

At step 220, an array of one or more receivers Xᵣᵢ (i = 1, 2, 3...) may be placed around the receiver X₁ as illustrated in Figure 1B. The array of receivers Xᵣᵢmay make up the dense array of receivers 110 as described in Figure 1A. In one implementation, the array of receivers Xᵣᵢ may cover an area of the earth such that the receiver X₂ may be included within this area.

At step 230, one or more Green's functions *G'*(X₁, Xᵣᵢ) (for all i>0) may be calculated between the receiver X₁ and each receiver Xᵣᵢ. Each Green's function *G'*(X₁, Xᵣᵢ) may include information about the local radiation pattern of a virtual source. In this implementation, the receiver X₁ may be considered to be the virtual source. The Green's functions *G*'(X₁, Xᵣᵢ) may then be calculated using interferometry and therefore may be biased due to the non-identical strengths of the sources Sᵢ surrounding the receivers X₁, X₂, and each Xᵣᵢ. In one implementation, the biased Green's functions *G'*(X₁, Xᵣᵢ) may be calculated in a space-time domain, but it may also be calculated in a variety of other domains such as the space-frequency domain and the like. After calculating the biased Green's functions in a particular domain, the biased Green's functions may be transformed into another domain (e.g., spatial wavenumber-frequency domain, time-radon domain) in order to facilitate additional data calculations or data processing.

At step 240, correction factors may be calculated to correct the bias due to the non-identical strengths of the sources Sᵢ surrounding the receivers X₁, X₂, and Xᵣᵢ. In one implementation, the correction factors may be calculated in a particular domain D in order to make the calculations less complex. For example, in a time-radon domain the correction factors may be calculated to equalize the energy emanating from the virtual source in all directions. Since the dense array of receivers 110 is located on a local area of the Earth, it may be assumed that the homogenous physical properties of the subterranean area on the Earth and the corresponding isotropics are most likely constant. Therefore, the radiation properties around a virtual source (receiver X₁) should be similar at any two points at the same radius away from the virtual source. The correction factors may then be calculated as a function of the radius and angle of the Green's function between the virtual source (receiver X₁) and a receiver Xᵣᵢ. In one implementation, the correction factors may be arranged in an array of numbers to represent the correction factor that may have been obtained for each receiver Xᵣᵢ in the array of receivers 110.

In another implementation, a truly uniform source may be modeled in any domain, and then transformed to the same domain D in which the Green's functions are created. The correction factors may then be calculated in the domain D to convert the biased Green's functions *G'*(X₁, Xᵣᵢ) into a uniform source data.

In yet another implementation, calculating correction factors may be carried out by assuming that the local area surrounding the virtual source (receiver X₁) is homogeneous with velocity V and then calculating synthetic, diffraction-limited Green's functions *G*(X₁, Xᵣᵢ). The velocity V might be measured or estimated independently or it may be estimated by finding the best fit between the biased Green's function *G*'(X₁, Xᵣᵢ) (with source biases) and the unbiased Green's function *G*"(X₁, Xᵣᵢ). In one implementation, the velocity V may be estimated independently using other methods, such as surface wave analysis or local seismic refraction surveys. The velocity V may also be frequency-dependent. By comparing these two Green's functions, frequency dependent corrections may be calculated and applied to the biased Green's function *G*'(X₁, Xᵣᵢ) to obtain the unbiased Green's function *G*"(X₁, Xᵣᵢ). The correction factors may then be calculated as a function of the radius and angle of the Green's function between the virtual source (receiver X₁) and a receiver Xᵣᵢ. In one implementation, the correction may be determined using a combination of the space, radon or spatial-wavenumber domains.

At step 250, the biased Green's function *G*'(Xᵣᵢ, X₂) (for all i = 1, 2, 3, ...) may be calculated between each receiver Xᵣᵢ in the dense array of receivers 110 and the second seismic receiver X₂ defined at step 210. Again, each biased Green's function *G*'(Xᵣᵢ, X₂) may be calculated using an interferometric calculation between each receiver Xᵣᵢ in the dense array of receivers 110 and the second seismic receiver X₂. Therefore, each calculated Green's function *G*'(Xᵣᵢ, X₂) may be biased according to the signal strength of the surrounding sources Sᵢ.

At step 260, the correction factors determined at step 240 may be applied to the biased Green's functions *G*'(Xᵣᵢ, X₂) determined at step 250 to determine the unbiased Green's functions *G*"(Xᵣᵢ, X₂). In one implementation, the biased Green's functions *G*'(Xᵣᵢ, X₂) may be transformed into the same domain D in which the correction factors were calculated in at step 240.

At step 270, the unbiased Green's functions *G"*(Xᵣᵢ, X₂) may be interpolated to determine the unbiased Green's function *G"*(X₁, X₂) between the virtual source (receiver X₁) and the second seismic receiver X₂. I n one implementation, the first seismic receiver X₁ may be defined as one of the receivers Xᵣᵢ in the array of receivers 110. In this situation, the unbiased Green's function *G"*(X₁, X₂) may correspond to an unbiased Green's function *G"*(Xᵣᵢ, X₂) where receiver X₁ is the same as receiver Xᵣᵢ. Therefore, step 270 may not be required to interpolate the unbiased Green's function *G"*(Xᵣᵢ, X₂) to determine the Green's function *G"*(X₁, X₂) between receiver X₁ and receiver X₂.

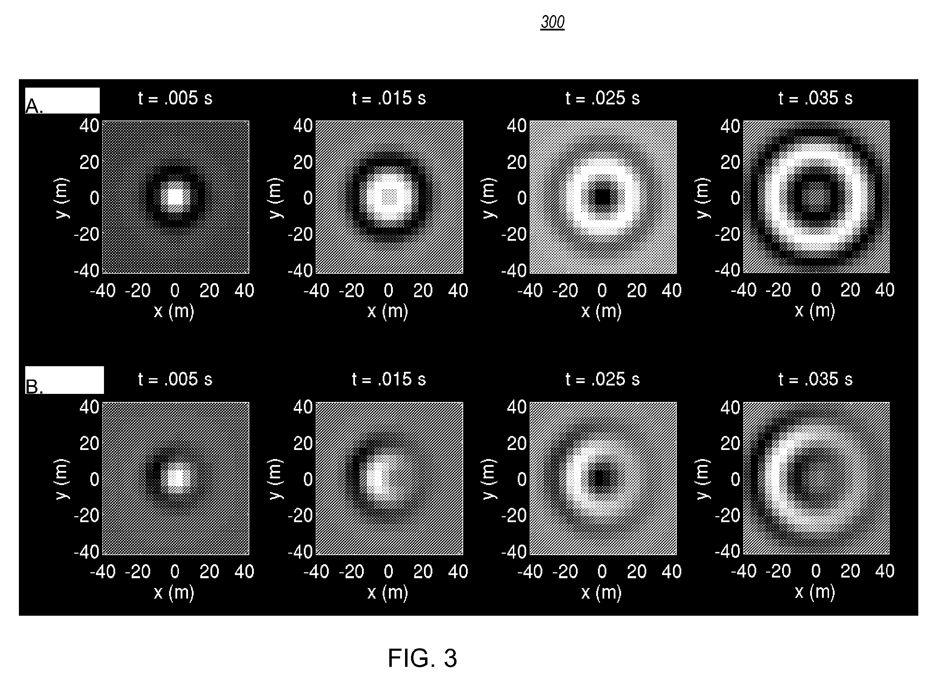

Figure 3 illustrates snapshots at different times of radiation patterns across a dense array of receivers in accordance with one or more implementations of various techniques described herein. Figure 3a illustrates a uniform radiation pattern across the dense array of receivers Xᵣᵢ, and Figure 3b illustrates a non-uniform radiation pattern across the dense array of the homogeneous medium as calculated using interferometry which may indicate that the signal strengths of the sources Sᵢ may not be uniform. As such, the interferometric-calculated Green's functions *G'*(X₁, Xᵣᵢ) may be biased due to the non-uniform radiation pattern of the sources Sᵢ as illustrated in Figure 3b. Prior to calculating correction factors as described in step 240 in Figure 2, a desired source radiation pattern may be modeled, as illustrated in Figure 3a, in order to obtain a diffraction-limited or unbiased Green's function.

In order to determine the correction factors for the non-uniform radiation pattern of interferometric Green's function *G'*(X₁, Xᵣᵢ) obtained in step 230, the non-uniform radiation patterns may be first tapered in space using a relatively harsh spatial taper, such as cosine tapering 90% of the dense array of receivers Xᵣᵢ. In one implementation, a three-dimensional Fourier transform may be applied to the tapered source-radiation patterns to transform the data to an f-kₓ-k_{y} domain, so the unbiased Green's function *G"*(X₁, Xᵣᵢ) estimate and the biased Green's function *G'*(X₁, Xᵣᵢ) become *G*(k₁,rᵢ, ω) and *G'*(k₁,rᵢ, ω) respectively, where k₁,rᵢ is the wavenumber vector describing all combinations of kₓ and k_{y} in the current configuration (i.e. for a source at X₁ and a receiver at Xᵣᵢ). A correction factor may then be determined by dividing the absolute values of *G*(k₁,rᵢ, ω) by the absolute values of *G'*(k₁,rᵢ, ω). A small factor may be applied to the denominator to stabilize the division (e.g. using a water level method to set the minimum level to 5% of the maximum value of the denominator). In one implementation, the correction factors may be based on the expected radiation properties as described in step 240 of Figure 2.

The correction factor may then be applied by tapering the biased interferometric Green's functions *G'*(X₁, Xᵣᵢ) estimates in space (using the same taper as for the radiation patterns), transforming the biased estimates into the f-kx-ky domain, multiplying by the scale factor, and applying the three-dimensional inverse Fourier transform. The results provide relatively unbiased estimates in the t-x-y domain. Since unbiased Green's functions *G*"(X₁, Xᵣᵢ) are displayed across an array and the desired virtual source location is at the center of the array, the four central array receivers or any other subset of the array of receivers may be interpolated to obtain the unbiased Green's function *G*"(X₁, Xᵣᵢ) for the center receiver.

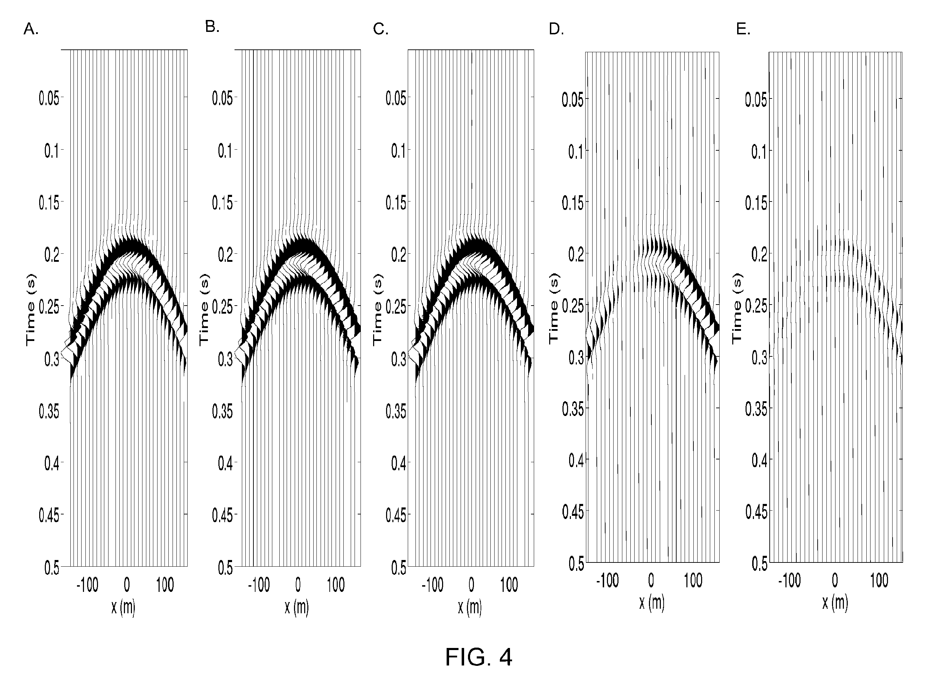

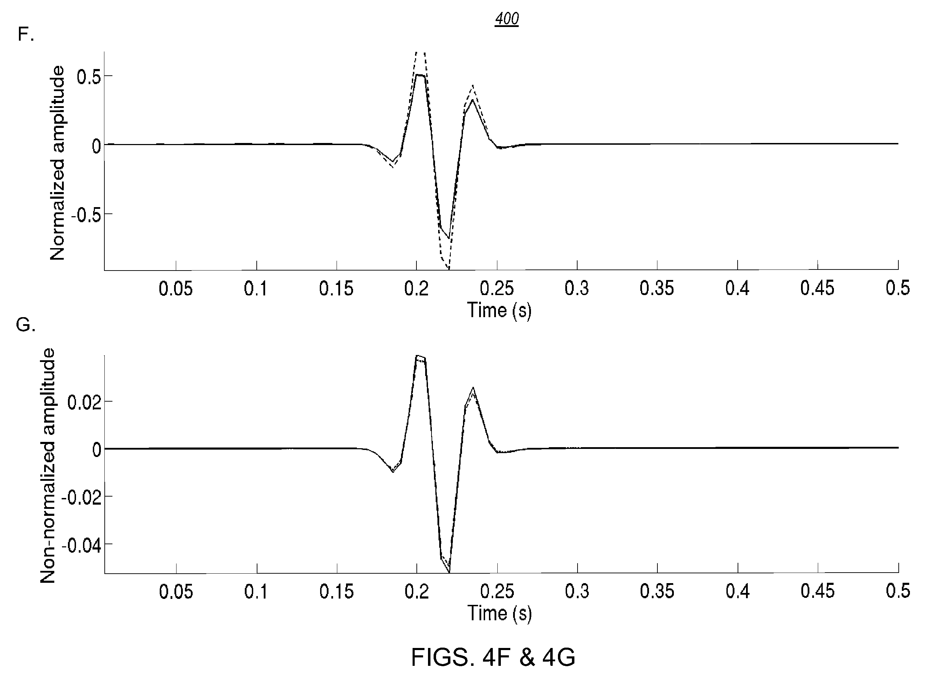

Figure 4 illustrates a set of Green's function estimates between a virtual source and a line of receivers in accordance with one or more implementations of various techniques described herein.

In one implementation, a set of biased Green's function estimates between the receiver X₁ (the virtual source position) and the line of receivers X₂ may be determined for a homogeneous case as described in step 230 (i.e., *G*'(X₁, X₂)). Figure 4A illustrates the set of biased Green's function estimates between the receiver X₁ and the line of receivers X₂. The unbiased Green's functions *G"*(X₁, X₂) are shown for comparison in Figure 4B and the desired result is plotted in Figure 4C. Since only a small portion of the boundary sources Sᵢ may contribute to the Green's function estimates, the amplitude variation in Figure 4A is not particularly large and therefore may not be noticeable between the figures.

Figure 4D illustrates the difference between the biased, estimated set of Green's functions in Figure 4A and the desired result in Figure 4C to illustrate the mismatch between the two estimates. The difference between the set of unbiased Green's functions in Figure 4B and the set of desired Green's functions in Figure 4C is plotted in Figure 4E. Figures 4D-4E are scaled such that they are shown at twice the scale of those in Figures 4A-4C in order to emphasize the difference between the two pairs of plots. The proposed method of Figure 2 may correct the amplitude imbalance introduced by the non-uniform source distribution as shown by the reduction in amplitude in Figure 4E compared to Figure 4D. To illustrate the amplitude imbalance in more detail a single trace from Figure 4A and a single trace from Figure 4C may be plotted on a graph in Figure 4F. The difference between the desired result (dotted line) and the obtained results (solid line) characterizes the bias of the Green's function obtained at step 230. Figure 4G, however, illustrates a single trace from Figure 4B and a single trace from Figure 4C to indicate that the unbiased Green's function *G*"(X₁, X₂) is substantially similar to the desired Green's function *G*(X₁,X₂)_{.}

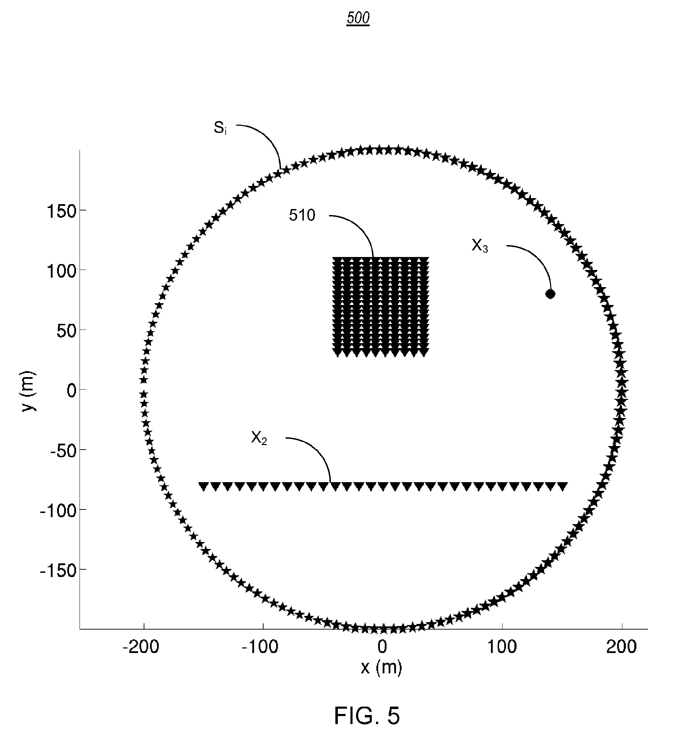

Figure 5 illustrates a schematic diagram of a source and receivers arranged in a scattering model in accordance with implementations of various techniques described herein. In one implementation, the scattering model may include a dense array of receivers 510, a line of receivers X₂, and source signals Sᵢ which may be described in Figure 1A.

The scattering model, however, may also include a scatterer location X₃. In one implementation, the scatterer location X₃ may represent an anomaly in the medium that may create a distortion in the seismic waves received by the line of receivers X₂.

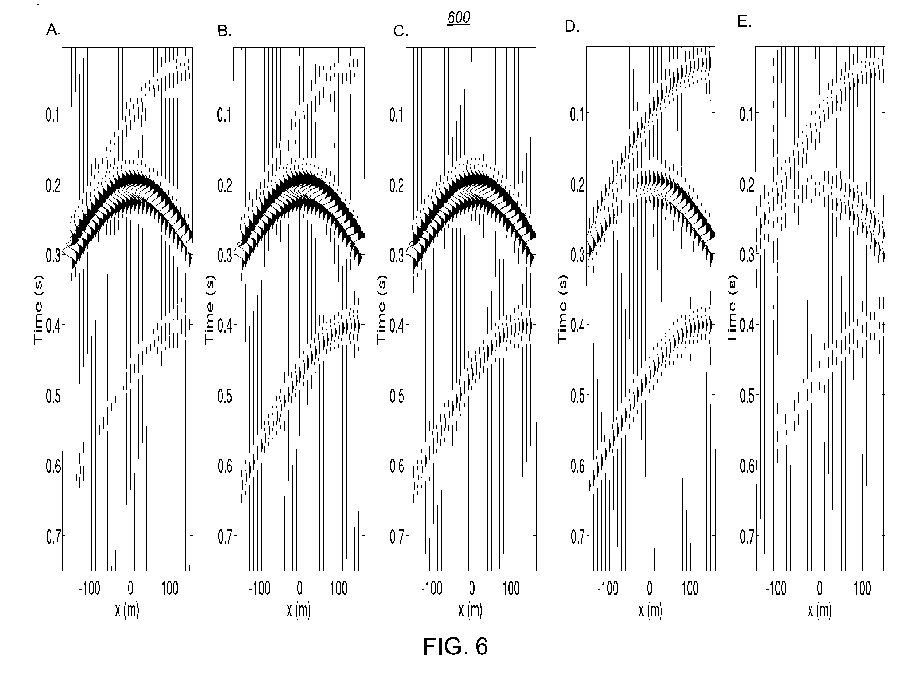

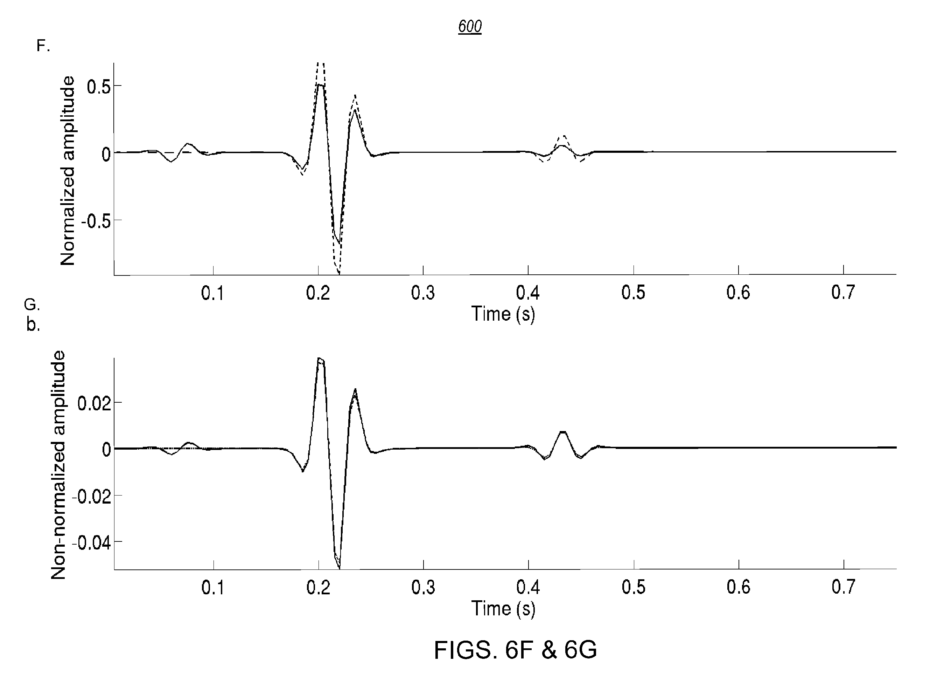

Figure 6 illustrates a set of Green's function estimates between a virtual source and a line of receivers as determined in a scattering model in accordance with one or more implementations of various techniques described herein. In one implementation, a set of biased Green's function estimates between the receiver X₁ (the virtual source position) and the line of receivers X₂ may be determined for a scattering case (i.e. *G*'(X₁, X₂)). Figure 6A illustrates the set of biased Green's function estimates between the receiver X₁ and the line of receivers X₂. The unbiased Green's functions *G"*(X₁, X₂) are shown for comparison in Figure 6B and the desired result is plotted in Figure 6C. Since only a small portion of the boundary sources may contribute to the Green's function estimates, the amplitude variation in Figure 6A is not particularly large and therefore may not be noticeable between the figures.

Figure 6D illustrates the difference between the biased, estimated set of Green's functions in Figure 6A and the desired result in Figure 6C to illustrate the mismatch between the two estimates. The difference between the set of unbiased Green's functions in Figure 6B and the set of desired Green's functions in Figure 6C is plotted in Figure 6E. Figures 6D-6E are scaled such that they are shown at twice the scale of those in Figures 6A-6C in order to emphasize the difference between the two pairs of plots. The proposed method of Figure 2 may correct the amplitude imbalance introduced by the non-uniform source distribution as shown by the reduction in amplitude in Figure 6E compared to Figure 6D. To illustrate the amplitude imbalance in more detail a single trace from Figure 6A and a single trace from Figure 6C may be plotted on a graph in Figure 6F. The difference between the desired result (dotted line) and the obtained results (solid line) characterizes the bias of the original Green's function. Figure 6G, however, illustrates a single trace from Figure 6B and a single trace from Figure 6C to indicate that the unbiased Green's function *G*"(X₁, X₂) is substantially more similar to the desired Green's function *G*(X₁, X₂).

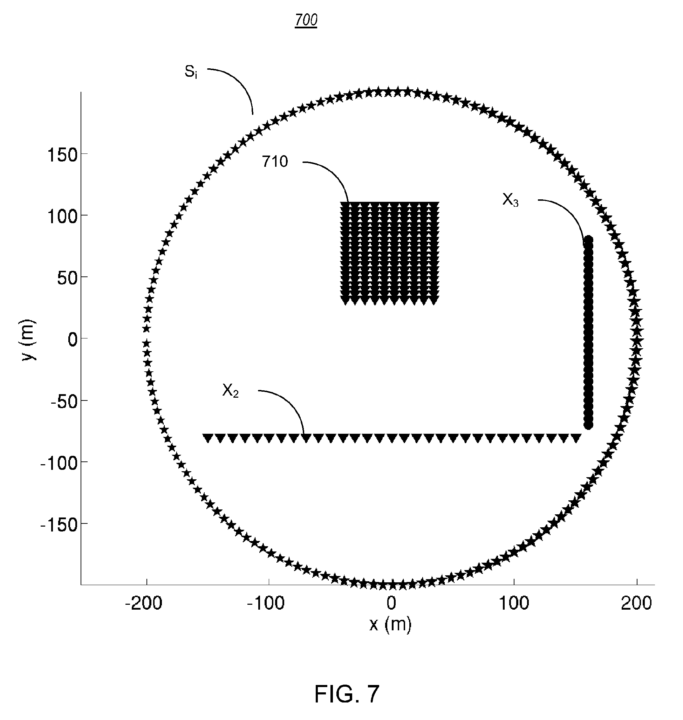

Figure 7 illustrates a schematic diagram of a sources and receivers arranged in a reflector model in accordance with implementations of various techniques described herein. In one implementation, the reflector model may include a dense array of receivers 710, a line of receivers X₂, and source signals Sᵢ which are described in the paragraphs above with reference to Figure 1A. The reflector model, however, may also include a reflector location X₃. In one implementation, the reflector location X₃ may represent a line of anomalies in the medium that may create a distortion in the seismic waves received by the line of receivers X₂.

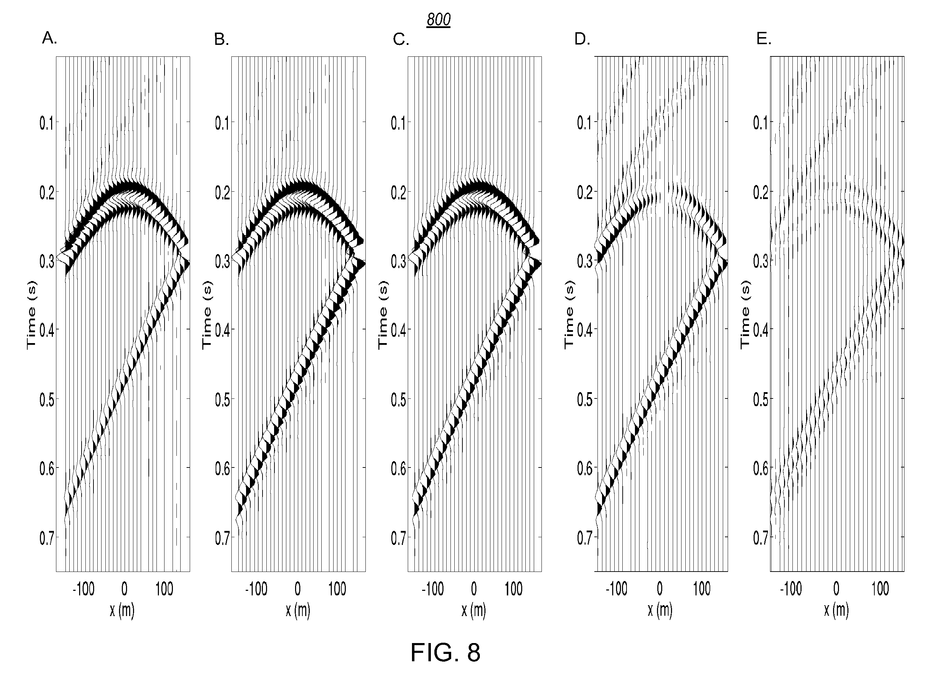

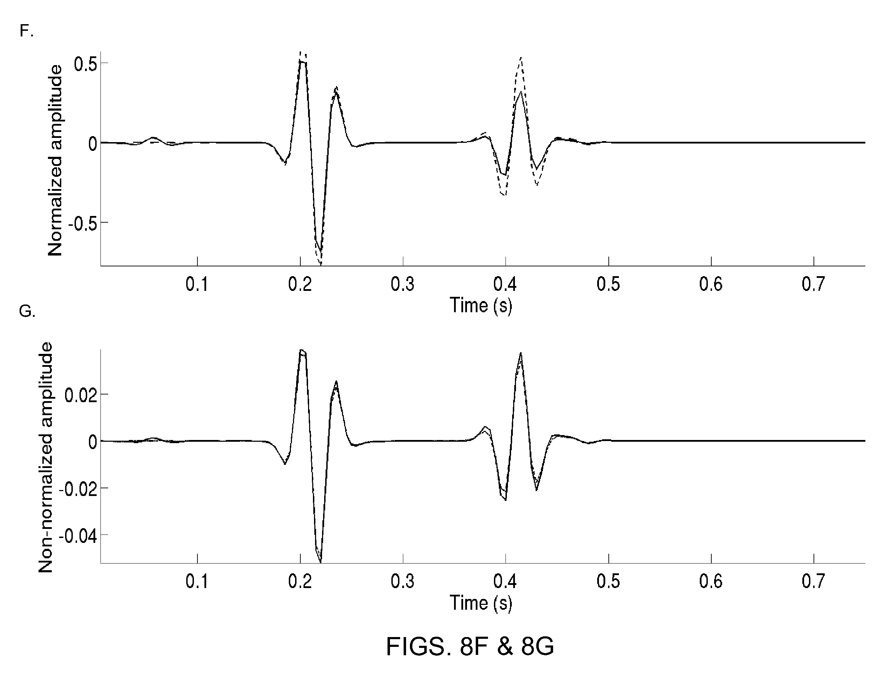

Figure 8 illustrates a set of Green's function estimates between a virtual source and a line of receivers as determined in a reflector model in accordance with one or more implementations of various techniques described herein. In one implementation, a set of biased Green's function estimates between the receiver X₁ (the virtual source position) and the line of receivers X₂ may be determined for a reflector case (i.e. *G'*(X₁, X₂)). Figure 8A illustrates the set of biased Green's function estimates between the receiver X₁ and the line of receivers X₂. The unbiased Green's functions *G"*(X₁, X₂) are shown for comparison in Figure 8B and the desired result is plotted in Figure 8C. Since only a small portion of the boundary sources may contribute to the Green's function estimates, the amplitude variation in Figure 8A is not particularly large and therefore may not be noticeable between the figures.

Figure 8D illustrates the difference between the biased, estimated set of Green's functions in Figure 8A and the desired result in Figure 8C to illustrate the mismatch between the two estimates. The difference between the set of unbiased Green's functions in Figure 8B and the set of desired Green's functions in Figure 8C is plotted in Figure 8E. Figures 8D-8E are scaled such that they are shown at twice the scale of those in Figures 8A-8C in order to emphasize the difference between the two pairs of plots. The proposed method of Figure 2 may correct the amplitude imbalance introduced by the non-uniform source distribution as shown by the reduction in amplitude in Figure 8E compared to Figure 8D. To illustrate the amplitude imbalance in more detail a single trace from Figure 8A and a single trace from Figure 8C may be plotted on a graph in Figure 8F. The difference between the desired result (dotted line) and the obtained results (solid line) characterizes the bias of the original Green's function. Figure 8G, however, illustrates a single trace from Figure 8B and a single trace from Figure 8C to indicate that the unbiased Green's function *G*"(X₁, X₂) is substantially similar to the desired Green's function *G*(X₁, X₂).

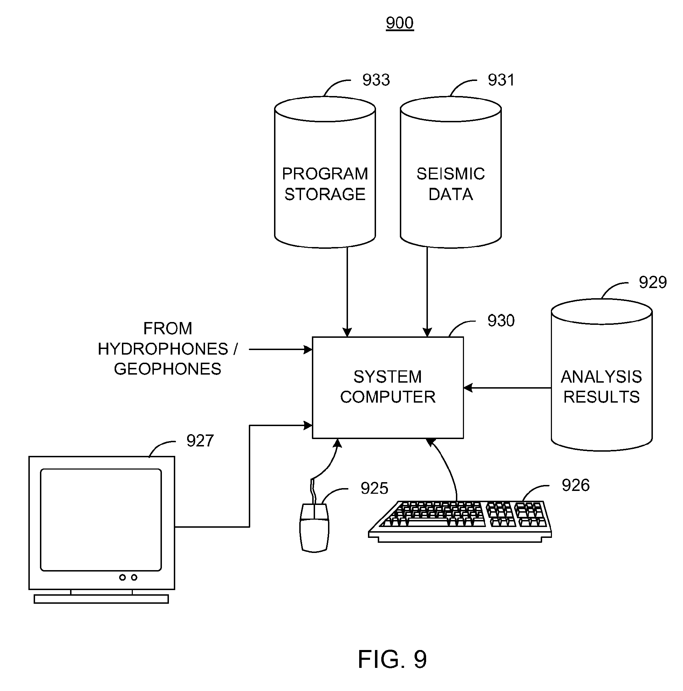

The methods of the invention may be computer-implemented. Figure 9 illustrates a computer network 900 into which implementations of various technologies described herein may be implemented. In one implementation, the method for estimating unbiased Green's functions between a pair of locations with energy from surrounding sources as described in Figure 2 may be performed on the computer network 900. The computer network 900 may include a system computer 930, which may be implemented as any conventional personal computer or server. However, it should be understood that implementations of various technologies described herein may be practiced in other computer system configurations, including hypertext transfer protocol (HTTP) servers, hand-held devices, multiprocessor systems, microprocessor-based or programmable consumer electronics, network PCs, minicomputers, mainframe computers, and the like.

The system computer 930 may be in communication with disk storage devices 929, 931, and 933, which may be external hard disk storage devices. It is contemplated that disk storage devices 929, 931, and 933 are conventional hard disk drives, and as such, will be implemented by way of a local area network or by remote access. Of course, while disk storage devices 929, 931, and 933 are illustrated as separate devices, a single disk storage device may be used to store any and all of the program instructions, measurement data, and results as desired.

In one implementation, seismic data from the receivers may be stored in disk storage device 931. The system computer 930 may retrieve the appropriate data from the disk storage device 931 to process seismic data according to program instructions that correspond to implementations of various technologies described herein. Seismic data may include pressure and particle velocity data. The program instructions may be written in a computer programming language, such as C++, Java and the like. The program instructions may be stored in a computer-readable memory, such as program disk storage device 933. Such computer-readable media may include computer storage media and communication media.

Computer storage media may include volatile and non-volatile, and removable and non-removable media implemented in any method or technology for storage of information, such as computer-readable instructions, data structures, program modules or other data. Computer storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the computing system 900.

Communication media may embody computer readable instructions, data structures, program modules or other data in a modulated data signal, such as a carrier wave or other transport mechanism and may include any information delivery media. The term "modulated data signal" may mean a signal that has one or more of its characteristics set or changed in such a manner as to encode information in the signal. By way of example, and not limitation, communication media may include wired media such as a wired network or direct-wired connection, and wireless media such as acoustic, RF, infrared and other wireless media. Combinations of the any of the above may also be included within the scope of computer readable media.

In one implementation, the system computer 930 may present output primarily onto graphics display 927. The system computer 930 may store the results of the methods described above on disk storage 929, for later use and further analysis. The keyboard 926 and the pointing device (e.g., a mouse, trackball, or the like) 925 may be provided with the system computer 930 to enable interactive operation.

The system computer 930 may be located at a data center remote from the survey region. The system computer 930 may be in communication with the receivers (either directly or via a recording unit, not shown), to receive signals indicative of the reflected seismic energy. After conventional formatting and other initial processing, these signals may be stored by the system computer 930 as digital data in the disk storage 931 for subsequent retrieval and processing in the manner described above. While Figure 9 illustrates the disk storage 931 as directly connected to the system computer 930, it is also contemplated that the disk storage device 931 may be accessible through a local area network or by remote access. Furthermore, while disk storage devices 929, 931 are illustrated as separate devices for storing input seismic data and analysis results, the disk storage devices 929, 931 may be implemented within a single disk drive (either together with or separately from program disk storage device 933), or in any other conventional manner as will be fully understood by one of skill in the art having reference to this specification.

While the foregoing is directed to implementations of various technologies described herein, other and further implementations may be devised without departing from the basic scope thereof, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method for estimating seismic data from sources of noise in the earth,
comprising:
calculating a first set of Green's functions between a first seismic receiver and each seismic receiver of an array of seismic receivers using interferometry, wherein the array of seismic receivers is disposed around the first seismic receiver such that the first seismic receiver is one of the seismic receivers of the array;
calculating one or more correction factors to correct the first set of Green's functions;
calculating a second set of Green's functions between each seismic receiver of the array and a second seismic receiver using interferometry, wherein the first seismic receiver is disposed at a predetermined distance away from the second seismic receiver and the first set and the second set of Green's functions are biased due to non-identical strengths of the sources of noise; and
applying the correction factors to the second set of Green's functions to create a set of unbiased Green's functions between each seismic receiver of the array and the second seismic receiver.

2. The method of claim 1, further comprising determining the unbiased Green's function between each seismic receiver of the array and the second seismic receiver to be the seismic data received between each seismic receiver of the array and the second seismic receiver.

3. The method of claim 1, wherein the first seismic receiver and the second seismic receiver are located in a seismic survey area having a homogeneous subterranean medium.

4. The method of claim 1, wherein the first seismic receiver and the second seismic receiver are located in a seismic survey area having a having a scatterer location representing an anomaly in a subterranean medium of the seismic survey area.

5. The method of claim 1 wherein the first seismic receiver and the second seismic receiver are located in a seismic survey area having a subterranean medium with a reflector location representing one or more anomalies arranged in a line in the subterranean medium of the seismic survey area.

6. The method of claim 1, wherein the array of seismic receivers comprises one or more seismic receivers separated at equal distances from each other.

7. The method of claim 1, wherein the array of seismic receivers encompasses the second seismic receiver.

8. The method of claim 1 wherein the seismic receivers in the array are assumed to be located in a seismic survey area having a homogenous subterranean medium and wherein the correction factors are calculated based on a similarity of one or more radiation properties that exist between the first seismic receiver and each seismic receiver in the array located at a same radius from the first seismic receiver.

9. The method of claim 1, wherein calculating the correction factors comprises:
transforming the first set of Green's functions into a time-radon domain;
determining the correction factors based on a similarity of one or more radiation properties that exist between the first seismic receiver and each seismic receiver in the array located at a same radius from the first seismic receiver;
transforming the second set of Green's functions into the time-radon domain;
applying the correction factors to the transformed second set of Green's functions; and
transforming the transformed second set of Green's functions back into an original domain.

10. The method of claim 1, further comprising
interpolating the unbiased set of Green's functions to determine a Green's function between the first seismic receiver and the second seismic receiver.

11. The method of claim 10, wherein the array of seismic receivers comprises one or more seismic receivers separated at equal distances from each other.

12. A computer system, comprising:
a processor; and
a memory comprising program instructions executable by the processor to perform a method as in claims 1-11.
